# EUROPEAN PATENT APPLICATION

(11) **EP 2 383 053 A1**
(43) Date of publication of application: **02.11.2011**
(21) Application number: 10161529.2
(22) Date of filing: 29.04.2010
(51) Int. Cl.: B21D 39/02, B62D 27/02, F16B 11/00

(54) **Metal panel assembly and method for making same**

(71) Applicant: 3M Innovative Properties Company, Saint Paul, MN 55133-3427 (US)
(72) Inventor: Koch, Bernard, B1831 Diegem (BE)
(74) Representative: Voortmans, Gilbert J.L.

(57) **Abstract**

The present invention discloses a metal panel assembly comprising:
a first metal panel (10) having a first body portion and a first flange (12) along a margin of the first body portion adjacent a first end (13) of the first body portion;
a second metal panel (20) having a second body portion and a second flange (22) along a margin of the second body portion adjacent a second end (23) of the second body portion;
an adhesive sheet (30) having a first portion (32) near a first end (31) of the adhesive sheet and a second portion (34) near a second end (33) opposite to the first end of the adhesive sheet;
said second flange of said second panel extending over said first body of said first panel with the second end of said second panel adjacent to said first flange of said first panel;
said first flange of said first panel being folded over said second flange of said second panel;
the first portion of the adhesive sheet being between and adhering said second flange of said second panel and said first body portion of said first panel;
the second portion of the adhesive sheet being folded over said second flange of said second panel and adhering said first flange of said first panel to said second flange of said second panel;
wherein the adhesive sheet comprises the thermoset reaction product of a melt-flowable and thermosettable composition that comprises an epoxy material and a thermoplastic polymer having one or more functional groups capable of reacting with an epoxy.

## Description

The present invention relates to a metal panel assembly wherein two metal panels are joined together at an edge, forming a so-called hemmed structure. The invention also relates to a method for joining two metal panels.

Vehicle closure panels typically comprise an assembly of an outer and an inner metal panel whereby a hem structure is formed by folding an edge of an outer panel over an edge of the inner panel. Typically, an adhesive is provided there between to bond the panels together. Further, a sealant typically needs to be applied at the joint of the metal panels to provide for sufficient corrosion resistance. For example, US 6,000,118 discloses the use of a flowable sealant bead between the facing surfaces of the two panels, and a thin film of uncured paint-like resin between a flange on the outer panel and the exposed surface of the inner panel. The paint film is cured to a solid impervious condition by a baking operation performed on the completed door panel.

US 6,368,008 disclose the use of an adhesive for securing two metal panels together. The edge of the joint is sealed by a metal coating. A further hemmed structure is disclosed in US 6,528,176.

It would now be desirable to find a solution whereby two metal panels, in particular an outer and an inner panel of a vehicle closure panel, can be joined with an adhesive without the need for a further material for sealing the joint. Thus, it will be desirable to find an adhesive that provides adequate bonding while also sealing the joint and providing corrosion resistance. Typically the joint of the metal panels for a vehicle closure panel is formed early in the manufacturing process where the panels are often contaminated for example with grease or oil. It would thus be desirable to find an adhesive for securing the panels to each other that is oil-compatible and that in particular allows the build up of an adhesive bond of adequate strength notwithstanding the presence of oil on the surface of the metal panels. The adhesive bond desirably has good crash resistance and preferably has a good elongation at break such that stress that might be created at the joint can be adsorbed without causing failure of the bond. It would be desirable to find a solution that enables automatization of the process of forming the metal joint between the metal plates and hence it would be desired that the adhesive can be applied by automated equipment.

In accordance with the present invention there is provided a method of making a metal panel assembly, the method comprising:
- providing a first metal panel having a first body portion and a first flange along a margin of the first body portion adjacent a first end of the first body portion;
- providing a second metal panel having a second body portion and a second flange along a margin of the second body portion adjacent a second end of the second body portion;
- providing an adhesive sheet having a first portion near a first end of the adhesive sheet and a second portion near a second end opposite to the first end of the adhesive sheet, the adhesive sheet comprising a melt-flowable and thermosettable composition that comprises an epoxy resin and a thermoplastic polymer having one or more functional groups capable of reacting with an epoxy material;
- adhering said adhesive sheet to said first or second metal panel;
- folding the first flange of the first panel over said second flange of said second panel;
   whereby following adhering and folding a metal joint is obtained wherein the adhesive sheet is folded such that the first portion of the adhesive sheet is between the second flange of said second panel and said first body portion of said first panel and the second portion of the adhesive sheet is between said first flange of said first panel and said second flange of said second panel;
- heating the metal joint so as to cause melt-flowing of the adhesive sheet and thermosetting of the thermosettable composition of the adhesive sheet, thereby adhering said first and second metal panel and sealing the metal joint.

In a further aspect of the present invention there is provided a metal panel assembly comprising:
a first metal panel having a first body portion and a first flange along a margin of the first body portion adjacent a first end of the first body portion;
a second metal panel having a second body portion and a second flange along a margin of the second body portion adjacent a second end of the second body portion;
an adhesive sheet having a first portion near a first end of the adhesive sheet and a second portion near a second end opposite to the first end of the adhesive sheet;
said second flange of said second panel extending over said first body of said first panel with the second end of said second panel adjacent to said first flange of said first panel;
said first flange of said first panel being folded over said second flange of said second panel;
the first portion of the adhesive sheet being between and adhering said second flange of said second panel and said first body portion of said first panel;
the second portion of the adhesive sheet being folded over said second flange of said second panel and adhering said first flange of said first panel to said second flange of said second panel;
wherein the adhesive sheet comprises the thermoset reaction product of a melt-flowable and thermosettable composition that comprises an epoxy material and a thermoplastic polymer having one or more functional groups capable of reacting with an epoxy.

The metal panels are typically steel panels but other metal panels such as aluminium panels may be used as well in connection with the invention.

It has been found that the adhesive sheet used in connection with the method typically allows bonding of the metal panels to an adequate level while also providing good sealing properties on the joint thereby providing corrosion resistance. Further, the adhesive sheet can generally be applied to metal panels that may be contaminated to some extent with for example oil and generally there will be no need for cleaning of the panels prior to applying the adhesive sheet. Application of the adhesive sheet through automated equipment such as robot heads is conceivable as well.

The following is a summary of embodiments according to the invention:
1. A method of making a metal panel assembly, the method comprising:
   - providing a first metal panel having a first body portion and a first flange along a margin of the first body portion adjacent a first end of the first body portion;
   - providing a second metal panel having a second body portion and a second flange along a margin of the second body portion adjacent a second end of the second body portion;
   - providing an adhesive sheet having a first portion near a first end of the adhesive sheet and a second portion near a second end opposite to the first end of the adhesive sheet, the adhesive sheet comprising a melt-flowable and thermosettable composition that comprises an epoxy resin and a thermoplastic polymer having one or more functional groups capable of reacting with an epoxy material;
   - adhering said adhesive sheet to said first or second metal panel;
   - folding the first flange of the first panel over said second flange of said second panel;
      whereby following adhering and folding a metal joint is obtained wherein the adhesive sheet is folded such that the first portion of the adhesive sheet is between the second flange of said second panel and said first body portion of said first panel and the second portion of the adhesive sheet is between said first flange of said first panel and said second flange of said second panel;
   - heating the metal joint so as to cause melt-flowing of the adhesive sheet and thermosetting of the thermosettable composition of the adhesive sheet, thereby adhering said first and second metal panel and sealing the metal joint.
2. A method according to embodiment 1 wherein said adhesive sheet is adhered to said second metal panel with the adhesive sheet being adhered to the second flange of the second metal panel and folded around the second end of the second metal panel such that the adhesive sheet is adhered to opposite sides of the second flange of the second metal panel.
3. A method according to embodiment 1 wherein the adhesive sheet is adhered to the first metal panel.
4. A method according to any of the previous embodiments wherein the thermoplastic polymer is a semi-crystalline polymer or an amorphous polymer having a glass transition temperature above -30°C.
5. A method according to any of the previous embodiments wherein the functional groups of the thermoplastic polymer are selected from the group consisting of hydroxyl and amino groups.
6. A method according to any of the previous embodiments wherein the thermoplastic polymer comprises a polyvinylacetal or a polyester.
7. A method according to any of the previous embodiments wherein the thermoplastic polymer is a semi-crystalline polymer.
8. A method according to any of the previous embodiments wherein the thermoplastic polymer comprises polyvinybutyral.
9. A method according to any of the previous embodiments wherein the epoxy material comprises a mixture of an epoxy material that is solid at 20°C and an epoxy material that is liquid at 20°C.
10. A method according to any of the previous embodiments wherein the melt-flowable and thermosettable composition further comprises an acrylic polymer.
11. A method according to any of the previous embodiments wherein the adhesive sheet comprises multiple layers whereby a layer defining a surface layer of the adhesive sheet is tacky at a temperature of 20°C.
12. A method according to embodiment 11 wherein the surface layer comprises said melt-flowable and thermosettable composition.
13. A method according to embodiment 12 wherein the adhesive sheet comprises at least two layers comprising said melt-flowable and thermosettable composition.
14. A method according to any of embodiments 1 to 10 wherein said adhesive sheet is not tacky at a temperature of 20°C and wherein the adhesive sheet is adhered to the first or second metal panel by heating spots of the adhesive sheet thereby causing melt-flowing of the adhesive sheet at said spots such that following cooling, the adhesive sheet is adhered to the metal panel at said spots.
15. A method according to any of the previous embodiments wherein the heating of the metal joint is carried out in one or more steps at a temperature between 60 and 200°C.
16. A metal panel assembly comprising:
   a first metal panel having a first body portion and a first flange along a margin of the first body portion adjacent a first end of the first body portion;
   a second metal panel having a second body portion and a second flange along a margin of the second body portion adjacent a second end of the second body portion;
   an adhesive sheet having a first portion near a first end of the adhesive sheet and a second portion near a second end opposite to the first end of the adhesive sheet;
   said second flange of said second panel extending over said first body of said first panel with the second end of said second panel adjacent to said first flange of said first panel;
   said first flange of said first panel being folded over said second flange of said second panel;
   the first portion of the adhesive sheet being between and adhering said second flange of said second panel and said first body portion of said first panel;
   the second portion of the adhesive sheet being folded over said second flange of said second panel and adhering said first flange of said first panel to said second flange of said second panel;
   wherein the adhesive sheet comprises the thermoset reaction product of a melt-flowable and thermosettable composition that comprises an epoxy material and a thermoplastic polymer having one or more functional groups capable of reacting with an epoxy.
17. A metal panel according to embodiment 16 wherein the functional groups of the thermoplastic polymer are selected from the group consisting of hydroxyl and amino groups.
18. A metal panel according to any of embodiments 16 or 17 wherein the thermoplastic polymer is a semi-crystalline polymer or an amorphous polymer having a glass transition temperature above -30°C.
19. A metal panel according to any of embodiments 16 to 18 wherein the thermoplastic polymer comprises a polyvinylacetal or a polyester.
20. A metal panel according to any of embodiments 16 to 19 wherein the thermoplastic polymer is a semi-crystalline polymer.
21. A metal panel according to any of embodiments 16 to 20 wherein the thermoplastic polymer comprises polyvinybutyral.
22. A metal panel according to any of embodiments 16 to 21 wherein the epoxy material comprises a mixture of an epoxy material that is solid at 20°C and an epoxy material that is liquid at 20°C.
23. A metal panel according to any of embodiments 16 to 22 wherein the melt-flowable and thermosettable composition further comprises an acrylic polymer.
24. A metal panel according to any of embodiments 16 to 23 wherein the adhesive sheet comprises multiple layers whereby a layer defining a surface layer of the adhesive sheet is tacky at a temperature of 20°C.
25. A metal panel according to embodiment 24 wherein the surface layer comprises said melt-flowable and thermosettable composition.
26. A metal panel according to embodiment 25 wherein the adhesive sheet comprises at least two layers comprising said melt-flowable and thermosettable composition.

The invention will be further described with reference to the following schematic figures without the intention to limit the invention thereto:
Fig. 1 is a cross-sectional view of a metal panel assembly in accordance with the present invention.
Fig. 2 is an embodiment showing a cross-sectional view of an inner panel with an adhesive sheet applied thereto and an outer panel 10 before joining it with the inner panel.

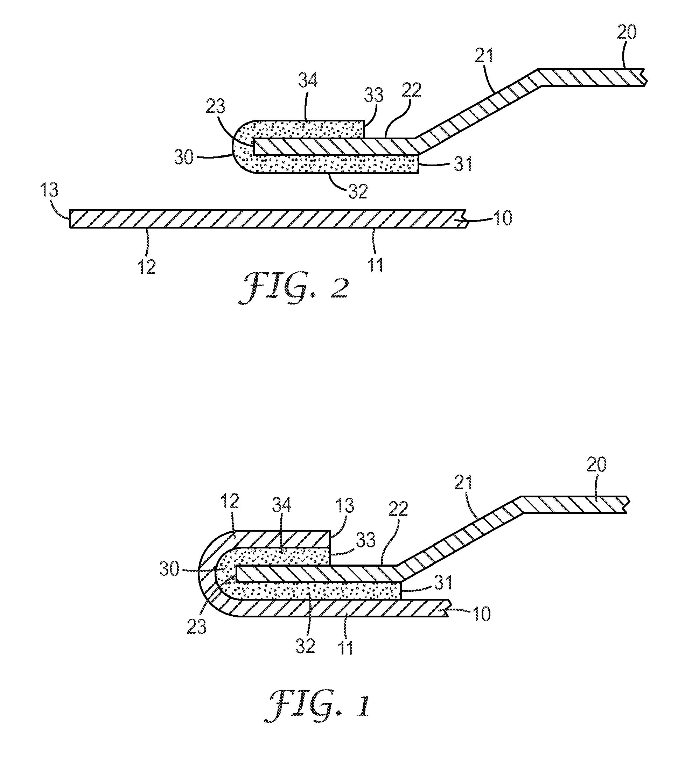

Figure 1 shows an embodiment in connection with the present invention. As shown in figure 1, the outer panel comprises a body portion 11 with a flange 12 along a margin of the body portion near end 13 of the outer panel. The flange 12 is folded over flange 22 of the inner panel 20. Flange 22 of inner panel is along a margin of body portion 21 of the inner panel near end 23. End 23 is adjacent flange 12 of the outer panel 10. An adhesive sheet 30 is between the inner 20 and outer panel 10. A portion 32 near end 31 of adhesive sheet 30 is between body portion 11 of outer panel 10 and the flange 22 of inner panel 20. The adhesive sheet 30 is folded over inner panel 20 and hence portion 34 near end 33 of the adhesive sheet 30 is between flange 12 of the outer panel and flange 22 of the inner panel. The adhesive sheet 30 bonds the two metal panels together at the joint or hem.

In accordance with one embodiment illustrated in figure 2, a metal assembly in accordance with the present invention, for example as illustrated in figure 1, may be obtained by adhering the adhesive sheet 30 to the inner metal panel 20. However, it is also possible to instead adhere the adhesive sheet 30 to the outer panel prior to joining the metal panels (not illustrated). As shown in figure 2, adhesive sheet 30 is adhered to the inner panel 20 at opposite sides of flange 22 of the inner panel and adhesive sheet 30 is folded around end 23 of the inner panel. In one embodiment, the adhesive sheet 30 has a surface that is tacky at ambient temperature, typically about 20°C, and can be adhered to the inner panel via this tacky surface. In another embodiment, the adhesive sheet may or may not have a tacky surface and is adhered to the inner panel by heating spots of the adhesive sheet 30 thereby causing melt-flowing of the adhesive sheet at these spots such that following cooling, the adhesive sheet is adhered to the metal panel at these spots. Typically, such heating step will be carried out a temperature of between 50 and 150°C, for example between 70 and 120°C. Obviously, these embodiments of adhering the adhesive sheet may also be used when adhering the adhesive sheet to the outer panel instead of the inner panel.

The outer panel 10 may then be folded such that the flange 12 of the outer panel is folded over the flange 22 of the inner panel 20 and over portion 34 of adhesive sheet 30. Accordingly, outer panel 10 will be folded over inner panel 20 with the adhesive sheet between the two panels and thus a metal joint is obtained. In case the adhesive sheet 30 was adhered to the outer panel 10 instead of inner panel 20, the adhesive sheet 30 will be folded inbetween the panels during folding of the outer panel 10 over flange 22 of the inner panel 20.

The metal joint obtained is then heated to cause melt-flowing of the adhesive sheet and thermosetting of the thermosettable composition of the adhesive sheet, thereby adhering the panels together and sealing the joint. This heating step can conveniently be performed whilst the panel assembly is being painted and baked as part of a usual vehicle manufacturing process. However, as desired, a separate heating or baking step of the metal joint may be provided as well. Typically the temperature for heating the metal joint and to cause adhering and sealing, is between 60 and 200°C, for example between 100 and 150°C. Heating may be carried out in one or more steps. For example two or more heating cycles at different temperatures in the aforementioned range may be carried out. For example in an embodiment, a first heating step may heat the metal joint to a temperature between 60 and 100°C and in a further heating step a higher temperature of between 80 and 200°C may be used. The heating time may vary but is typically between 5 minutes and 60 min., for example between 10 and 30 min.. When several heating steps are used, the time for each of the heating steps may vary and may be within the aforementioned ranges.

The adhesive sheet for use in connection with the present invention comprises a melt-flowable and thermosettable composition that comprises an epoxy resin and a thermoplastic polymer having one or more functional groups capable of reacting with an epoxy. The thermoplastic polymer may be a semi-crystalline polymer or an amorphous polymer. In a particular embodiment, the thermoplastic polymer has a glass transition temperature above - 30°C.

The adhesive sheet is typically solid, and may or may not be tacky at room temperature. Typically, the melt-flowable and thermosettable composition of the adhesive sheet has a melting point above about 50°C. Upon heating the melt-flowable composition, melts sufficiently to wet out on a surface and adhere to it.

The melt-flowable composition may be formed into a sheet using conventional sheet forming techniques, including extruding the material from a heated die; heating the sheet material to a suitable melt temperature and knife coating onto a release liner; curtain coating the molten material; or dispersing the material in a solvent, coating onto a release liner, and drying the solvent. For environmental reasons, the preferred methods are solvent free systems.

The thickness of the adhesive sheet material will vary widely. Useful thicknesses have been found to be in the range of about 0.05 mm (millimeters) to 25 mm. For typical joining of metal panels, thicknesses may range from 3 to 25 mm, for example 4 to 10 mm, or 5 to 8 mm.

The adhesive sheet can be packaged in the form of rolls of sheet material, rolls of tapes, i.e., lengths of material in narrow widths, or stacks of sheets cut to a desired dimension or shape for the end use. If the adhesive sheet is tacky, a release liner may be interleaved between adjacent sheets or wraps of a roll. In some two layer sheet constructions in which one layer is tacky, the non-tacky layer may serve as the liner without requiring a separate liner.

The adhesive sheet can include one or more layers. For example, the adhesive sheet can include multiple layers comprising a melt-flowable and thermosettable composition and which may have different melting or softening points. The adhesive sheet may also include, a thermosettable pressure-sensitive adhesive layer, a pressure-sensitive adhesive layer or a nonwoven layer.

The thermoplastic polymers used in the melt-flowable and thermosettable composition of the adhesive sheet include amorphous polymers and semi-crystalline polymers. Suitable amorphous polymers include those having a glass transition temperature above -30°C. Semi-crystalline polymers for use in the composition may have a glass transition temperature above, at or below -30°C. The thermoplastic polymers have one or more functional groups capable of participating in a reaction with an epoxy group. Useful polymers are those having functional groups including -OH, -NH, and -NH₂. Examples of useful polymers include polyesters, functionalized acrylic polymers, such as those functionalized with -OH groups, polyacetals, such as polyvinylbutyral, olefinic polymers having the appropriate functional groups and, polycaprolactones.

In a particular embodiment, the melt-flowable composition of the adhesive sheet includes one or more thermoplastic polymers selected from polyvinyl butyral, polycaprolactones, and polyesters having hydroxyl and carboxyl termination and they may be amorphous or semi-crystalline at room temperature. Generally preferred are polymers having a hydroxyl group such as amorphous or semi-crystalline polyvinybutyral, and hydroxyl terminated polyesters that are semi-crystalline at room temperature. A material that is "amorphous" has a glass transition temperature but does not display a measurable crystalline melting point as determined on a differential scanning calorimeter (DSC). A material that is "semi-crystalline" displays a crystalline melting point as determined by DSC, preferably with a maximum melting point of about 200°C.

Crystallinity in a polymer is also observed as a clouding or opacifying of a sheet that had been heated to an amorphous state as it cools. When a polyester polymer is heated to a molten state and knife coated onto a liner to form a sheet, it is amorphous and the sheet is observed to be clear and fairly transparent to light. As the polymer in the sheet material cools, crystalline domains form and the crystallization is characterized by the clouding of the sheet to a translucent or opaque state. The degree of crystallinity may be varied in the polymers by mixing in any compatible combination of amorphous polymers and semi-crystalline polymers having varying degrees of crystallinity.

The polymers may include nucleating agents to increase the rate of crystallization at a given temperature. Useful nucleating agents include microcrystalline waxes. A suitable wax is one comprising C greater than 14 (CAS #71770-71-5) alcohol and an ethylene homopolymer (CAS #9002-88-4) sold by Petrolite Corp. as Unilin 700.

Useful, commercially available hydroxyl terminated polyester materials include various saturated linear, semi-crystalline copolyesters available from Evonic Industries. such as Dynapol™ S1401, Dynapol™ S1402, Dynapol™ S1358, Dynapol™ S1359, Dynapol™ S1227, and Dynapol™ S1229. Useful saturated, linear amorphous copolyesters available from Evonic Industries, include Dynapol™ S1313 and Dynapol™ S1430.

Commercially available polyvinyl butyral polymers that may be used include the BUTVAR series (available from Solutia) of polyvinylacetal resins such as BUTVAR B-72A, B-73, B-76, B-90 and B-98. Commercially available caprolactones include those of the TONE series (available from Union Carbide) of polycaprolactone polyols such as TONE 0200, 0210, 0230, 0240, and 0260.

Epoxy-containing materials useful in the melt-flowable and thermosettable compositions of the adhesive sheet include organic compounds having at least one oxirane ring 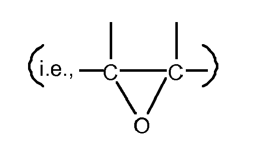 polymerizable by a ring opening reaction. Such materials, broadly called epoxides, include both monomeric and polymeric epoxides and can be aliphatic, cycloaliphatic, or aromatic. These materials generally have, on the average, at least two epoxy groups per molecule (preferably more than two epoxy groups per molecule). The "average" number of epoxy groups per molecule is defined as the number of epoxy groups in the epoxy-containing material divided by the total number of epoxy molecules present. The polymeric epoxides include linear polymers having terminal epoxy groups (e.g., a diglycidyl ether of a polyoxyalkylene glycol), polymers having skeletal oxirane units (e.g., polybutadiene polyepoxide), and polymers having pendent epoxy groups (e.g., a glycidyl methacrylate polymer or copolymer). The molecular weight of the epoxy-containing material may vary from 58 to about 100,000 or more. Mixtures of various epoxy-containing materials can also be used. For example in a particular embodiment, the melt-flowable and thermosettable composition may include a mixture of a liquid and solid epoxy containing material for example to provide tackiness to the adhesive sheet at room temperature.

Useful epoxy-containing materials include those which contain cyclohexene oxide groups such as the epoxycyclohexanecarboxylates, typified by 3,4-epoxycyclohexylmethyl-3,4-epoxycyclohexanecarboxylate, 3,4-epoxy-2-methylcyclohexylmethyl-3,4-epoxy-2-methylcyclohexane carboxylate, and bis(3,4-epoxy-6-methylcyclohexylmethyl) adipate. For a more detailed list of useful epoxides of this nature, reference may be made to U.S. Patent No. 3,117,099.

Further epoxy-containing materials which are particularly useful in the practice of this invention include copolymers of glycidyl ether monomers of the formula 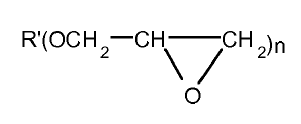 where R' is alkyl or aryl and n is an integer of 1 to 6. Examples are the glycidyl ethers of polyhydric phenols obtained by reacting a polyhydric phenol with an excess of chlorohydrin such as epichlorohydrin (e.g., the diglycidyl ether of 2,2-bis-(2,3-epoxypropoxyphenol) propane). Further examples of epoxides of this type which can be used in the practice of this invention are described in U.S. Patent No. 3,018,262.

There is a host of commercially available epoxy-containing materials which can be used in this invention. In particular, epoxides which are readily available include octadecylene oxide, epichlorohydrin, styrene oxide, vinyl cyclohexene oxide, glycidol, glycidylmethacrylate, diglycidyl ether of Bisphenol A (e.g., those available under the trade designations EPON 828, EPON 1004, and EPON 1001 F from Shell Chemical Co., and DER-332 and DER-334, from Dow Chemical Co.), diglycidyl ether of Bisphenol F (e.g., ARALDITE GY281 from Ciba-Geigy), vinylcyclohexene dioxide (e.g., ERL 4206 from Union Carbide Corp.), 3,4-epoxycyclohexylmethyl-3,4-epoxycyclohexene carboxylate (e.g., ERL-4221 from Union Carbide Corp.), 2-(3,4-epoxycylohexyl-5,5-spiro-3,4-epoxy) cyclohexane-metadioxane (e.g., ERL-4234 from Union Carbide Corp.), bis(3,4-epoxycyclohexyl) adipate (e.g., ERL-4299 from Union Carbide Corp.), dipentene dioxide (e.g., ERL-4269 from Union Carbide Corp.), epoxidized polybutadiene (e.g., OXIRON 2001 from FMC Corp.), silicone resin containing epoxy functionality, epoxy silanes (e.g., beta-(3,4-epoxycyclohexyl)ethyltrimethoxy silane and gamma-glycidoxypropyltrimethoxy silane, commercially available from Union Carbide), flame retardant epoxy resins (e.g., DER-542, a brominated bisphenol type epoxy resin available from Dow Chemical Co.), 1,4-butanediol diglycidyl ether (e.g., ARALDITE RD-2 from Ciba-Geigy), hydrogenated bisphenol A-epichlorohydrin based epoxy resins (e.g., EPONEX 1510 from Shell Chemical Co.), and polyglycidyl ether of phenolformaldehyde novolak (e.g., DEN-431 and DEN-438 from Dow Chemical Co.).

The melt-flowable and thermosettable composition of the adhesive sheet comprises based on 100 parts of the total of epoxy containing material and thermoplastic polymer component having one or more functional groups capable of reacting with an epoxy group, from 0.01 to 95 parts of the epoxy-containing material and, correspondingly, from 99.99 to 5 parts of the thermoplastic polymer component having one or more functional groups capable of reacting with an epoxy group. More preferably, the melt-flowable composition comprises from 0.1 to 80 parts of the epoxy-containing material and, correspondingly, from 99.9 to 20 parts of the thermoplastic polymer component. Most preferably, the hot melt compositions of the invention comprise from 0.5 to 60 parts of the epoxy-containing material, and, correspondingly, from 99.5 to 40 parts of the thermoplastic polymer component.

The melt-flowable and thermosettable composition of the adhesive sheet may further include a heat activatable curative to effect curing of the epoxy resin when heated. The hardener may be any type, but preferably, it is an amine type hardener such as dicyandiamide and polyamine salts. Suitable commercial curatives are available under the Omicure™ trademark from Emerald Materials, and under the Ajicure™ trademark from Ajinomoto Chemical. The curative is used in an amount sufficient to cure the epoxy resin, typically, in an amount from 0.1 to 20 parts by weight, and preferably, 0.5 to 10 parts by weight per 100 parts of epoxy resin.

In an embodiment an accelerator may be further added to the melt-flowable composition because the heat to which the composition is exposed may be insufficient to fully activate the curing agents to cure the epoxy resin. The accelerator allows the adhesive to cure at a lower temperature and/or for shorter periods of heat exposure. Imidazoles and urea derivatives are particularly preferred in the practice of the present invention and useful compounds include 2,4-diamino-6-(2'-methyl imidazole)-ethyl-s-triazine isocyanurate, 2-phenyl-4-benzyl-5-hydroxymethylimidazole, hexakis (imidizole)nickel phthalate, and toluene bis-dimethylurea. The accelerator may be used in an amount up to 20 parts by weight per 100 parts by weight of the epoxy resin.

In a particular embodiment in connection with the present invention, the melt-flowable and thermosettable composition further comprises an acrylic polymer. The acrylic polymer is typically a polymer of one or more acrylic esters of a non-tertiary alcohol, the alkyl groups of which have from 4 to 12 carbon atoms. Examples of acrylic esters include butyl acrylate, hexyl acrylate, 2-ethylhexyl acrylate, octyl acrylate, isooctyl acrylate, decyl acrylate, isobornyl acrylate and dodecyl acrylate. The acrylic polymer may include further monomers such as for example a polar monomer copolymerizable with the acrylic ester monomers. Examples of polar monomers include acrylic and methacrylic acids, N-vinyl pyrrolidone, N-vinyl caprolactam, N-vinyl piperidine and acrylonitrile. Further, in a particular embodiment, the acrylic polymer may also include a monomer having an epoxy group or a group such as a hydroxyl group capable of reacting with an epoxy group. Examples of epoxy containing monomers include glycidyl acrylate and glycidyl methacrylate. Typically, the acrylic polymer may be contained in the melt-flowable and thermosettable composition in an amount of 50 to 100 parts by weight of the total weight of the composition, for example from 70 to 90 parts by weight of the total weight of the composition.

In a particular embodiment, at least one surface of the adhesive sheet is tacky. While the melt-flowable and thermosettable composition can be provided as a tacky layer and hence a single layer tacky adhesive sheet may thereby be provided, it will generally be preferred to provide a tacky surface of the adhesive sheet through a separate tacky layer. In an particular embodiment, the tacky layer may be a layer of a thermosettable pressure sensitive adhesive (PSA) which is tacky and pressure-sensitive at room temperature, and which cures to a thermoset adhesive after heating. Suitable thermosettable PSA's include a thermosettable component and a pressure-sensitive adhesive component. The thermosettable component will generally be present in an amount of about 25 to 150 parts by weight based on 100 parts by weight of the PSA component.

Coatable compositions for the thermosettable PSA can be formed by various methods which include blending together a solvent-based PSA, a thermosettable resin, and thermosettable curatives; dissolving a pressure-sensitive elastomer, such as a nitrile butadiene rubber, in a solvent, and mixing with thermosettable resins and curatives; and blending monomers or prepolymers useful for making a PSA, such as the monomers for making the above-mentioned acrylate copolymers, with thermosettable resins and curatives, and photopolymerizing the blends. In a particular embodiment, the thermosettable component of the thermosettable PSA comprises an epoxy material as described above and one or more of the thermoplastic polymers having a functional group capable of reacting with an epoxy group as described above.

Materials useful for the PSA component include block copolymer PSA's, such as styreneisoprene-styrene block copolymers that can be hot melt coated or solvent coated; acrylonitrile PSA's; acrylate PSA's, such as copolymers of acrylic or methacrylic esters of non-tertiary alcohols having from about 4 to 12 carbon atoms in the alcohol moiety and optional copolymerizable reinforcing monomers, that are polymerized using known techniques including solvent polymerization, emulsion polymerization, and radiation polymerization; natural rubber PSA's, silicone PSA's, and vinyl acetate PSA's. Preferred materials include acrylonitriles and acrylates, and especially preferred are acrylates.

In a preferred embodiment, the thermosettable PSA comprises the photopolymerized reaction product of a composition having (i) a prepolymeric (i.e., partially polymerized to a viscous syrup typically between about 100 and 10,000 centipoises) or monomeric syrup of an acrylic or methacrylic acid ester as described above; (ii) optionally, a comonomer as described above; (iii) an epoxy resin; (iv) a photoinitiator; and (v) a heat activatable hardener for the epoxy. The adhesives can be prepared according to the procedures found in U.S. Patent No. 5,086,088.

The photoinitiators useful for polymerizing the prepolymeric or monomeric syrup may be any conventional free radical initiator activatable by, for example, ultraviolet light. An example of a suitable photoinitiator is 2,2-dimethoxy-2-phenyl acetophenone (Irgacure™651 available from Ciba-Geigy Corporation). The photoinitiator is used in an amount sufficient to polymerize the monomers, typically about 0.01 to 5 parts by weight per 100 parts of the prepolymeric or monomeric syrup.

The heat activatable curative is added to the composition to effect curing of the epoxy resin when heated. The hardener may be any type, but preferably, it is an amine type hardener such as dicyandiamide and polyamine salts. Suitable commercial curatives are available under the Omicure™ trademark from Omicron Chemical, and under the Ajicure™ trademark from Ajinomoto Chemical. The curative is used in an amount sufficient to cure the epoxy resin, typically, in an amount from 0.1 to 20 parts by weight, and preferably, 0.5 to 10 parts by weight per 100 parts of epoxy resin.

It is useful to further add an accelerator to the adhesive composition because the heat to which the composition is exposed may be insufficient to fully activate the curing agents to cure the epoxy resin. The accelerator allows the adhesive to cure at a lower temperature and/or for shorter periods of heat exposure. Imidazoles and urea derivatives are particularly preferred in the practice of the present invention and useful compounds include 2,4-diamino-6-(2'-methyl imidazole)-ethyl-s-triazine isocyanurate, 2-phenyl-4-benzyl-5-hydroxymethylimidazole, hexakis (imidizole)nickel phthalate, and toluene bis-dimethylurea. The accelerator may be used in an amount up to 20 parts by weight per 100 parts by weight of the epoxy resin.

In making the adhesive sheet with a thermosettable PSA the aforementioned solvent based compositions are coated onto a flexible web, preferably a silicone coated release liner, at the desired adhesive thickness and the solvent is removed by heating the adhesive to a temperature below the thermosetting temperature. The adhesive is then laminated to a sheet of the melt-flowable and thermosettable composition for further use. Alternatively, the compositions can be coated directly onto the sheet and dried at temperatures below the hot melt activation temperature.

## Claims

1. A method of making a metal panel assembly, the method comprising:
- providing a first metal panel having a first body portion and a first flange along a margin of the first body portion adjacent a first end of the first body portion;
- providing a second metal panel having a second body portion and a second flange along a margin of the second body portion adjacent a second end of the second body portion;
- providing an adhesive sheet having a first portion near a first end of the adhesive sheet and a second portion near a second end opposite to the first end of the adhesive sheet, the adhesive sheet comprising a melt-flowable and thermosettable composition that comprises an epoxy resin and a thermoplastic polymer having one or more functional groups capable of reacting with an epoxy material;
- adhering said adhesive sheet to said first or second metal panel;
- folding the first flange of the first panel over said second flange of said second panel;
whereby following adhering and folding a metal joint is obtained wherein the adhesive sheet is folded such that the first portion of the adhesive sheet is between the second flange of said second panel and said first body portion of said first panel and the second portion of the adhesive sheet is between said first flange of said first panel and said second flange of said second panel;
- heating the metal joint so as to cause melt-flowing of the adhesive sheet and thermosetting of the thermosettable composition of the adhesive sheet, thereby adhering said first and second metal panel and sealing the metal joint.

2. A method according to claim 1 wherein said adhesive sheet is adhered to said second metal panel with the adhesive sheet being adhered to the second flange of the second metal panel and folded around the second end of the second metal panel such that the adhesive sheet is adhered to opposite sides of the second flange of the second metal panel.

3. A method according to any of the previous claims wherein the thermoplastic polymer is a semi-crystalline polymer or an amorphous polymer having a glass transition temperature above -30°C.

4. A method according to any of the previous claims wherein the thermoplastic polymer comprises a polyvinylacetal or a polyester.

5. A method according to any of the previous claims wherein the thermoplastic polymer comprises polyvinybutyral.

6. A method according to any of the previous claims wherein the epoxy material comprises a mixture of an epoxy material that is solid at 20°C and an epoxy material that is liquid at 20°C.

7. A method according to any of the previous claims wherein the melt-flowable and thermosettable composition further comprises an acrylic polymer.

8. A method according to any of claims 1 to 7 wherein said adhesive sheet is not tacky at a temperature of 20°C and wherein the adhesive sheet is adhered to the first or second metal panel by heating spots of the adhesive sheet thereby causing melt-flowing of the adhesive sheet at said spots such that following cooling, the adhesive sheet is adhered to the metal panel at said spots.

9. A method according to any of the previous claims wherein the heating of the metal joint is carried out in one or more steps at a temperature between 60 and 200°C.

10. A metal panel assembly comprising:
a first metal panel having a first body portion and a first flange along a margin of the first body portion adjacent a first end of the first body portion;
a second metal panel having a second body portion and a second flange along a margin of the second body portion adjacent a second end of the second body portion;
an adhesive sheet having a first portion near a first end of the adhesive sheet and
a second portion near a second end opposite to the first end of the adhesive sheet;
said second flange of said second panel extending over said first body of said first panel with the second end of said second panel adjacent to said first flange of said first panel;
said first flange of said first panel being folded over said second flange of said second panel;
the first portion of the adhesive sheet being between and adhering said second flange of said second panel and said first body portion of said first panel;
the second portion of the adhesive sheet being folded over said second flange of said second panel and adhering said first flange of said first panel to said second flange of said second panel;
wherein the adhesive sheet comprises the thermoset reaction product of a melt-flowable and thermosettable composition that comprises an epoxy material and a thermoplastic polymer having one or more functional groups capable of reacting with an epoxy.

11. A metal panel according to claim 10 wherein the thermoplastic polymer is a semi-crystalline polymer or an amorphous polymer having a glass transition temperature above -30°C.

12. A metal panel according to any of claims 10 to 11 wherein the thermoplastic polymer comprises a polyvinylacetal or a polyester.

13. A metal panel according to any of claims 10 to 12 wherein the thermoplastic polymer comprises polyvinybutyral.

14. A metal panel according to any of claims 10 to 13 wherein the melt-flowable and thermosettable composition further comprises an acrylic polymer.

15. A metal panel according to claim 14 wherein the adhesive sheet comprises at least two layers comprising said melt-flowable and thermosettable composition.
